# EUROPÄISCHE PATENTSCHRIFT

(11) **EP 2 812 223 B1**
(45) Veröffentlichungstag und Bekanntmachung des Hinweises auf die Patenterteilung: **01.06.2016**
(21) Anmeldenummer: 13717219.3
(22) Anmeldetag: 04.04.2013
(51) Int. Cl.: B61D 49/00, B60N 3/02, B60R 21/02, B61D 17/18, B61D 19/00

(54) **HALTEANORDNUNG FÜR EINEN EINSTIEGSBEREICH EINES SCHIENENFAHRZEUGS UND VERFAHREN ZUM ZUSAMMENBAUEN DER HALTEANORDNUNG**
HOLDING ARRANGEMENT FOR AN ENTRY AREA OF A RAIL VEHICLE AND METHOD FOR ASSEMBLING THE HOLDING ARRANGEMENT
SYSTÈME DE RETENUE POUR UNE ZONE D'ACCÈS D'UN VÉHICULE SUR RAILS ET PROCÉDÉ D'ASSEMBLAGE DU DISPOSITIF DE RETENUE

(30) Priorität: 29.05.2012 DE 102012208991
(43) Veröffentlichungstag der Anmeldung: 17.12.2014
(73) Patentinhaber: Siemens Aktiengesellschaft, 80333 München (DE)
(72) Erfinder: BIADATZ, Adrian, 47804 Krefeld (DE); KIRCHHOFF, Sascha, 47799 Krefeld (DE)
(86) Internationale Anmeldenummer: PCT/EP2013/057084
(87) Internationale Veröffentlichungsnummer: WO 2013/178387

(56) Entgegenhaltungen:
- WO-A1-2005/102773
- DE-C- 508 577
- US-A- 2 037 805
- US-A- 3 577 903

## Beschreibung

Die Erfindung betrifft eine Halteanordnung für einen Einstiegsbereich eines Schienenfahrzeugs nach dem Oberbegriff des Anspruchs 1.

Bekannt ist somit eine Halteanordnung für einen Einstiegsbereich eines Schienenfahrzeugs, mit:
- einem stangenförmigen Halteelement,
- einem Türholmverkleidungselement zum Verkleiden eines Türholms, wobei das Türholmverkleidungselement eine Durchgangsöffnung aufweist,
- einem Abstandselement, das zwischen dem Halteelement und dem Türholmverkleidungselement angeordnet ist und eine Durchgangsöffnung aufweist,
- einem Verbindungselement zum Verbinden des Türholmverkleidungselements mit dem Türholm, wobei das Verbindungselement auf einer dem Abstandselement abgewandten Seite des Türholmverkleidungselements angeordnet ist und eine Durchgangsöffnung aufweist. Eine solche Halteranordnung ist beispielsweise aus der US 3 577 903 A bekannt.

Eine weitere Halteanordnung ist aus der WO 2005/102773 A1 bekannt. Zudem betrifft die Erfindung ein Verfahren zum Zusammenbauen einer Halteanordnung für einen Einstiegsbereich eines Schienenfahrzeugs.

Aus der Praxis ist bekannt, dass eine Halteanordnung im Bereich einer Einstiegstür des Schienenfahrzeugs vorgesehen ist, die ein Halteelement aufweist, das mit einem Türholmverkleidungselement verbunden ist. Das Türholverkleidungselement ist mit einem Türholm des Schienenfahrzeugs verbunden, an dem die Einstiegstür angeschwenkt ist. Die Halteanordnung ermöglicht es, dass sich Fahrgäste an dem Halteelement während eines Aussteigens aus dem Schienenfahrzeug, eines Einsteigens in das Schienenfahrzeug oder während der Fahrt in dem Schienenfahrzeug festhalten können.

Ein einteiliges Halteelement der Halteanordnung kann einen stangenförmigen Grundkörper und senkrecht zum Grundkörper umgebogene Endabschnitte des Halteelements aufweisen, die mit dem Türholmverkleidungselement verbunden sein können. Alternativ kann das einteilige Halteelement den stangenförmigen Grundkörper und einen oder mehrere Abstandsabschnitte aufweisen, die entlang einer Längserstreckung des Grundkörpers verteilt angeordnet, mit dem Grundköper verschweißt und mit dem Türholverkleidungselement verbunden sein können.

Es ist eine Aufgabe der Erfindung, Maßnahmen bereitzustellen, mit deren Hilfe eine Halteanordnung für einen Einstiegsbereich eines Schienenfahrzeugs auf einfache und kostengünstige Weise zusammenbaubar und mit einem Türholm des Schienenfahrzeugs verbindbar ist.

Erfindungsgemäß ist eine Halteanordnung für einen Einstiegsbereich eines Schienenfahrzeugs vorgesehen, mit einem stangenförmigen Halteelement, das eine Durchgangsöffnung aufweist, einem Türholmverkleidungselement zum Verkleiden eines Türholms, wobei das Türholmverkleidungselement eine Durchgangsöffnung aufweist, einem Abstandselement, das zwischen dem Halteelement und dem Türholmverkleidungselement angeordnet ist und eine Durchgangsöffnung aufweist, einem Verbindungselement zum Verbinden des Türholmverkleidungselements mit dem Türholm, wobei das Verbindungselement auf einer dem Abstandselement abgewandten Seite des Türholmverkleidungselements angeordnet ist und eine Durchgangsöffnung aufweist, und einer Verbindungsschraube, die durch die Durchgangsöffnung des Halteelements, die Durchgangsöffnung des Abstandselements und die Durchgangsöffnung des Türholmverkleidungselements in der Durchgangsöffnung des Verbindungselements verschraubt ist.

Die erfindungsgemäße Halteanordnung beruht folglich auf dem Konzept, dass anstelle eines einteiligen Halteelements ein Halteelement und ein separates Abstandselement vorgesehen sein können, die eine von dem Türholmelement beabstandete, zweitteilige Festhaltemöglichkeit für Fahrgäste des Schienenfahrzeugs in dem Einstiegsbereich des Schienenfahrzeugs ermöglichen kann. Das Halteelement, das Abstandselement und das Türholmverkleidungselement können mittels einer Verbindungsschraube mit einem Verbindungselement verbunden sein, indem die Verbindungsschraube sich durch die Durchgangsöffnungen des Halteelements, des Abstandselements und des Türholverkleidungselements erstrecken kann. Das Verbindungselement kann direkt oder indirekt, d.h. über ein weiteres Verbindungselement oder weitere Verbindungselemente, mit dem Türholm eines Schienenfahrzeugs verbindbar sein.

Die modulare Bauweise der Halteanordnung kann folglich einen Austausch von verschlissenen oder beschädigten Bauteilen der Halteanordnung ermöglichen, so dass Wartungskosten für die Halteanordnung besonders gering sein können. Ferner kann ein Zusammenbauen oder eine Montage der Halteanordnung besonders einfach und zeitsparend und daher kostengünstig durchgeführt werden, da das Halteelement, das Abstandselement und das Türholmverkleidungselement in einem einzigen Arbeitsschritt mit dem Verbindungselement verbunden werden können. Insbesondere können das Halteelement, das Abstandselement und das Türholmverkleidungselement, beispielsweise außerhalb des Schienenfahrzeugs, mit der Verbindungsschraube als Modul verbunden werden und erst danach mit dem Verbindungselement verschraubt werden. Dabei kann das Verbindungselement bereits mit dem Türholm verbunden sein oder erst danach mit dem Türholm verbunden werden.

Insbesondere können das Halteelement und/oder das Abstandselement massiv, also aus Vollmaterial, ausgebildet sein. Das Halteelement und/oder das Abstandselement können Aluminium aufweisen oder aus Aluminium ausgebildet sein. Insbesondere kann das Abstandselement als Fräsbauteil oder Frästeil, beispielsweise als Aluminiumfräsbauteil, ausgebildet sein.

Die Durchgangsöffnung des Halteelements kann sich in Richtung zum Abstandselement hin stufenförmig verjüngen, wobei ein Schraubenkopf der Verbindungsschraube an einem sich quer, insbesondere senkrecht, zur Längserstreckung der Durchgangsöffnung erstreckenden Abschnitt einer Begrenzungswand der Durchgangsöffnung anliegen kann. Insbesondere kann eine entsprechende Anlagefläche in dem Halteelement, die durch den Abschnitt der Begrenzungswand der Durchgangsöffnung gebildet sein kann, einer Formgebung des Schraubenkopfs folgen. Dadurch kann die Verbindungsschraube vollständig in dem Halteelement aufgenommen werden, so dass eine Verletzungsgefahr für einen Fahrgast während des Festhaltens an dem Halteelement verringert werden kann. Ferner kann die Halteanordnung besonders kompakt ausgebildet sein.

Insbesondere kann sich die Durchgangsöffnung des Abstandselements bezüglich einer Längserstreckung des Halteelements quer, insbesondere senkrecht, und/oder mittig durch das Abstandselement hindurch erstrecken. Die erste Maßnahme kann ein Durchführen der Verbindungsschraube durch das Abstandselements erleichtern. Die zweite Maßnahme kann eine besonders stabile Verbindung zwischen dem Halteelement und dem Verbindungselement ermöglichen, da eine Krafteinleitung in das Abstandselement während des Zusammenbauens der Halteanordnung gleichmäßig verteilt sein kann.

Insbesondere kann die Durchgangsöffnung des Abstandselements entlang ihrer Längserstreckung einen konstanten Durchmesser aufweisen.

Das Abstandselement kann eine weitere Durchgangsöffnung aufweisen, die sich in Richtung zum Halteelement hin stufenförmig verjüngen kann, wobei das Abstandselement mittels einer weiteren Verbindungsschraube mit dem Halteelement verschraubt sein kann, deren Schraubenkopf an einem sich quer, insbesondere senkrecht, zur Längserstreckung der weiteren Durchgangsöffnung des Abstandselements erstreckenden Abschnitt einer Begrenzungswand der weiteren Durchgangsöffnung anliegen kann. Dabei kann die Formgebung des Abschnitts der Kontur des anliegenden Schraubenkopfs folgen. Diese Maßnahme kann das Zusammenbauen der Haltanordnung vereinfachen, da das Halteelement und das Abstandselement mittels der Verbindungsschraube bereits verbunden sein können und danach erst durch die Durchgangsöffnung des Türholmverkleidungselements mit dem Verbindungselement verschraubt werden können. Insbesondere kann das Halteelement dazu eine entsprechende Ausnehmung aufweisen. Ferner kann der Schraubenkopf der weiteren Verbindungsschraube in dem Abstandselement aufgenommen sein, so dass eine Stirnfläche des Abstandselements, die zu dem Verbindungselement weisen kann, flach ausgebildet und eine passgenaue und bündige Anlage des Abstandselements an einem entsprechenden benachbarten Bauteil der Halteanordnung ermöglicht sein kann.

Das Abstandselement kann eine Ausnehmung aufweisen, die von einer zum Halteelement weisenden Stirnfläche aus in das Abstandselement eingebracht sein kann, wobei das Halteelement eine in Flucht mit der Ausnehmung angeordnete Ausnehmung aufweisen kann, die von einer zum Abstandselement weisenden Stirnfläche aus in das Halteelement eingebracht sein kann, wobei die Halteanordnung ferner einen Verbindungsstift aufweisen kann, der, insbesondere jeweils zur Hälfte, in der Ausnehmung des Abstandselements und der Ausnehmung des Halteelements angeordnet sein kann. Insbesondere können eine Längserstreckung der Ausnehmung des Abstandselements und eine Längserstreckung der Ausnehmung des Halteelements geringfügig größer als eine Längserstreckung des Verbindungsstifts sein. Dadurch können eine Verdrehsicherung und eine Zentrierung des Abstandselements und des Halteelements während der Montage beider Elemente zueinander bewerkstelligt sein, so dass das Zusammenbauen der Halteanordnung und deren Verbinden mit dem Türholm weiter vereinfacht sein kann. Insbesondere kann der Verbindungsstift zuerst in die Ausnehmung des Abstandselements und des Halteelements eingebracht werden, bevor die weitere Verbindungsschraube in das Abstandselement eingeführt und mit dem Halteelement verschraubt sein kann. Insbesondere kann das Halteelement dazu eine entsprechende weitere Ausnehmung aufweisen.

Insbesondere können die Ausnehmung des Halteelements und die weitere Ausnehmung des Halteelements jeweils benachbart zur Durchgangsöffnung des Halteelements angeordnet sein und/oder sich parallel zur Durchgangsöffnung des Halteelements erstrecken.

Insbesondere können die weitere Durchgangsöffnung des Abstandselements und die Ausnehmung des Abstandselements jeweils benachbart zur Durchgangsöffnung des Abstandselements angeordnet sein und/oder sich parallel zur Durchgangsöffnung des Abstandselements erstrecken.

Das Abstandselement kann eine weitere Ausnehmung aufweisen, die von einer zum Verbindungselement weisenden Stirnfläche aus in das Abstandselement eingebracht sein kann, wobei das Verbindungselement eine weitere Durchgangsöffnung aufweisen kann, wobei die Halteanordnung ferner einen weiteren Verbindungsstift aufweisen kann, der, insbesondere jeweils zur Hälfte, in der weiteren Ausnehmung des Abstandselements und der weiteren Durchgangsöffnung des Verbindungselements angeordnet sein kann. Insbesondere kann eine Längserstreckung der weiteren Ausnehmung des Abstandselements geringfügig größer als eine Hälfte der Längserstreckung des Verbindungsstifts sein. Dies kann ebenfalls eine Verdrehsicherung und Zentrierung des Abstandselements und des Verbindungselements während des Zusammenbauens beider Bauteile ermöglichen.

Die Ausnehmung des Abstandselements und die weitere Ausnehmung des Abstandselements können zueinander in Flucht angeordnet sein, so dass eine besonders gute Platzausnutzung des Abstandselements ermöglicht und das Abstandselement besonders klein ausgebildet sein kann.

Das Abstandselement kann zumindest eine noch weitere Ausnehmung aufweisen, die von einer zum Verbindungselement weisenden Stirnfläche des Abstandselements in das Abstandselement eingebracht sein kann, wobei das Türholmverkleidungselement beabstandet zu einem Abschnitt eines Rands seiner Durchgangsöffnung einen winkelförmigen Vorsprung aufweisen kann, wobei ein Abschnitt des Türholmverkleidungselements benachbart zu dem Abschnitt des Rands der Durchgangsöffnung und der winkelförmige Vorsprung eine Tasche bilden können, wobei die Halteanordnung ferner ein plattenförmiges Anlageelement für das Abstandselement und das Verbindungselement, das in der Tasche angeordnet sein und eine Durchgangsöffnung aufweisen kann, und eine noch weitere Verbindungsschraube aufweisen kann, die durch die Durchgangsöffnung des Anlageelements in der zumindest einen noch weiteren Ausnehmung des Abstandselements verschraubt sein kann. Dies kann eine einfache Verbindung zwischen dem Türholmverkleidungselement und dem Abstandselement ermöglichen und eine Möglichkeit einer Beschädigung des Türholmverkleidungselements während der Montage des Abstandselements und des Halteelements reduziert, da das Abstandselement nicht direkt mit dem Türholmverkleidungselement in Kontakt kommen kann.

Insbesondere können die Durchgangsöffnung des Anlageelements in einem Randbereich des Anlageelements und die noch weitere Ausnehmung des Abstandselements in einem Randbereich des Abstandselements angeordnet sein, so dass die beteiligten Bauteile miteinander verbunden werden können und gleichzeitig eine mittige Verschraubung mittels der Verbindungsschraube ermöglicht sein kann.

Insbesondere kann das Abstandselement eine Mehrzahl noch weiterer Ausnehmungen, insbesondere genau zwei noch weitere Ausnehmungen aufweisen, in die jeweils eine noch weitere Verbindungsschraube durch eine entsprechende Durchgangsöffnung des Anlageelements verschraubt sein kann. Die noch weiteren Ausnehmungen des Abstandselements können identisch ausgebildet sein und/oder sich jeweils parallel zu einer der Durchgangsöffnungen des Abstandselements und/oder einer der Ausnehmungen des Abstandselements erstrecken. Insbesondere kann die Mehrzahl der noch weiteren Ausnehmungen des Abstandselements im Umfangsrichtung des Abstandselements gesehen in einem Randbereich des Abstandselements gleichmäßig verteilt sein und/oder entlang der Längserstreckung des Halteelements gesehen zueinander in Flucht und/oder in Flucht mit den Durchgangsöffnungen des Abstandselements angeordnet sein. Die entsprechende Durchgangsöffnung des Anlageelements kann dabei mit jeweils einer der Mehrzahl von noch weiteren Aufnahmen angeordnet sein.

Insbesondere kann das Verbindungselement für jede noch weitere Ausnehmung des Abstandselements eine Ausnehmung aufweisen, die in Flucht mit der Durchgangsöffnung des Anlageelements und der Ausnehmung des Abstandselements angeordnet sein kann, so dass ein Schraubenkopf der noch weiteren Verbindungsschraube in dem Verbindungselement aufgenommen sein kann und das Verbindungselement und das Anlageelement bündig aneinander liegen können. Dadurch kann die Halteanordnung besonders kompakt ausgebildet sein.

Ein Körper des Abstandselements kann im Wesentlichen quaderförmig ausgebildet sein, wobei eine Längserstreckung des Körpers im Wesentlichen parallel zur Längserstreckung des Halteelements verlaufen kann. Diese Maßnahme kann eine Stabilisierung des Halteelements entlang seiner Längserstreckung ermöglichen und ein Bauraum des Abstandselements entlang der Längserstreckung des Halteelements gesehen kann besonders gut ausgenützt werden, da eine entsprechende Stirnfläche des Abstandselements ausreichend groß ausgebildet sein kann, um die Anordnung der Ausnehmungen und der Durchgangsöffnungen des Abstandselements zu ermöglichen.

Eine zum Halteelement weisende Stirnfläche des Abstandselements kann an dem Halteelement anliegen und konkav gewölbt ausgebildet sein, und eine der Stirnfläche gegenüberliegende weitere Stirnfläche des Abstandselements kann am Anlageelement anliegen und flach ausgebildet sein. Dies kann eine besonders kompakte und stabile Bauweise der Halteanordnung ermöglichen.

Insbesondere kann zumindest eine der Durchgangsöffnungen des Halteelements, des Abstandselements, des Anlageelements und/oder des Verbindungselements als Durchbohrung mit ausgebildet sein und/oder ein Innengewinde aufweisen. Insbesondere kann zumindest eine der Ausnehmungen des Halteelements, des Abstandselements und/oder des Verbindungselements als Bohrung, beispielsweise als Sackloch, ausgebildet sein und/oder ein Innengewinde aufweisen.

Insbesondere kann die Halteanordnung eine Mehrzahl von, insbesondere identisch ausgebildeten, Abschnitten des Halteelements und Abschnitten des Türholmverkleidungselements, Abstandselementen, Verbindungselementen und optional Anlageelementen aufweisen, die gemäß einer oder mehrerer der oben beschriebenen Ausführungsformen ausgebildet sind.

Die Erfindung betrifft ferner ein Schienenfahrzeug, mit einer Halteanordnung, die oben beschrieben ist. Das Schienenfahrzeug kann beispielsweise eine Straßenbahn oder ein Zug, insbesondere ein Hochgeschwindigkeitszug, sein.

Die Erfindung betrifft ferner ein Verfahren zum Zusammenbauen einer Halteanordnung für einen Einstiegsbereich eines Schienenfahrzeugs, die oben beschrieben ist, mit Bereitstellen eines stangenförmigen Halteelements, das eine Durchgangsöffnung aufweist, Bereitstellen eines Türholmverkleidungselements zum Verkleiden eines Türholms, wobei das Türholmverkleidungselement eine Durchgangsöffnung aufweist, Bereitstellen eines Abstandselements, das eine Durchgangsöffnung aufweist, Bereitstellen eines Verbindungselements zum Verbinden des Türholmverkleidungselements mit dem Türholm, wobei das Verbindungselement eine Durchgangsöffnung aufweist, Anordnen des Abstandselements zwischen dem Halteelement und dem Türholmverkleidungselement, Anordnen des Verbindungselements auf einer dem Abstandselement abgewandten Seite des Türholmverkleidungselements und Verschrauben des Halteelements mittels einer Verbindungsschraube durch seine Durchgangsöffnung, durch die Durchgangsöffnung des Abstandselements und durch die Durchgangsöffnung des Türholmverkleidungselements in der Durchgangsöffnung des Verbindungselements.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei können die nachfolgend dargestellten Merkmale sowohl jeweils einzeln als auch in Kombination einen Aspekt der Erfindung darstellen. Es zeigen
- Fig. 1: eine schematische Ansicht eines Einstiegsbereichs eines Schienenfahrzeugs mit einer Halteanordnung gemäß einem Ausführungsbeispiel;
- Fig. 2: eine schematische perspektivische Vorderansicht der Halteanordnung in Fig. 1;
- Fig. 3: eine schematische perspektivische Rückansicht der Halteanordnung in Fig. 1 teilweise im Schnitt;
- Figuren 4, 5: schematische perspektivische Vorderansichten der Halteanordnung in Fig. 1 teilweise im Schnitt;
- Fig. 6: eine schematische Seitenansicht der Halteanordnung in Fig. 1 teilweise im Schnitt; und
- Figuren 7, 8: schematische Explosionsseitenansichten der Halteanordnung in Fig. 1 teilweise im Schnitt.

Ein Einstiegsbereich 10 eines Schienenfahrzeugs 12 weist einen Türholm 14 auf, an dem eine Tür 16 des Schienenfahrzeugs 12 angeschwenkt ist. Eine Halteanordnung 18 für den Einstiegsbereich 10 des Schienenfahrzeugs 12 gemäß einem Ausführungsbeispiel ist in dem Einstiegsbereich 10 des Schienenfahrzeugs 12 benachbart zum Türholm 14 zwischen der Tür 16 und einem Schrank 20 des Schienenfahrzeugs 12 angeordnet. Die Halteanordnung 18 weist ein stangenförmiges, massives Halteelement 22 auf, das mittels zweier massiver Abstandselemente 24a, 24b von einer gewölbten Ausbuchtung 26 eines Türholmverkleidungselements 28 beabstandet angeordnet ist.

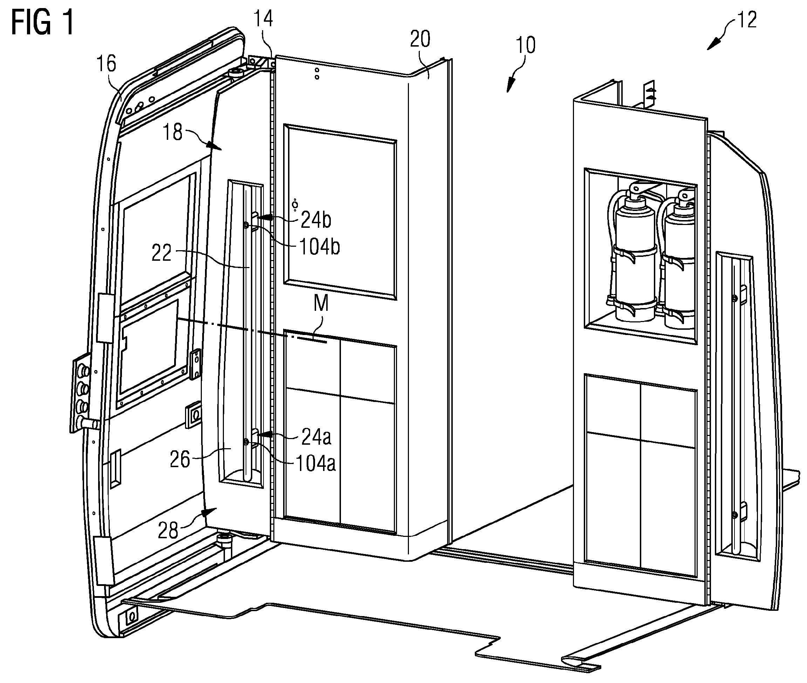

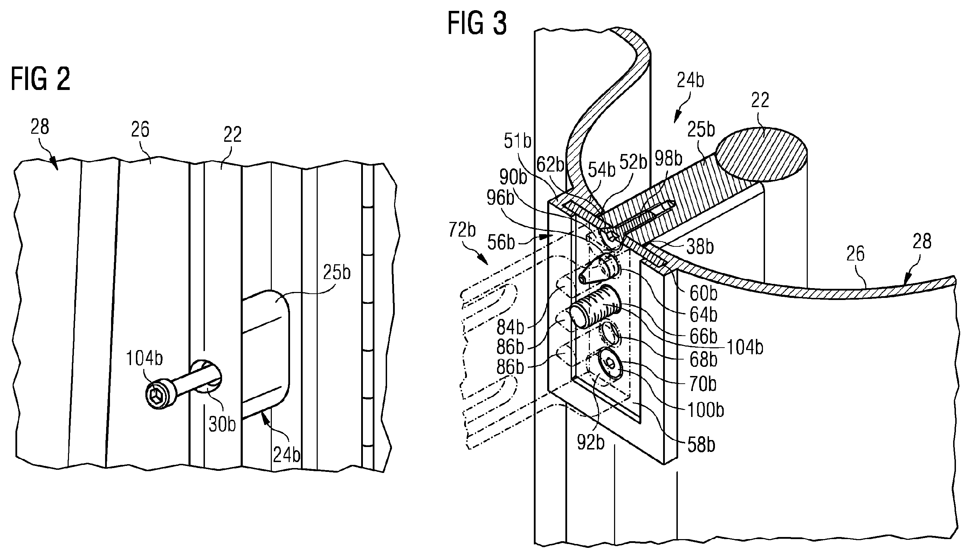

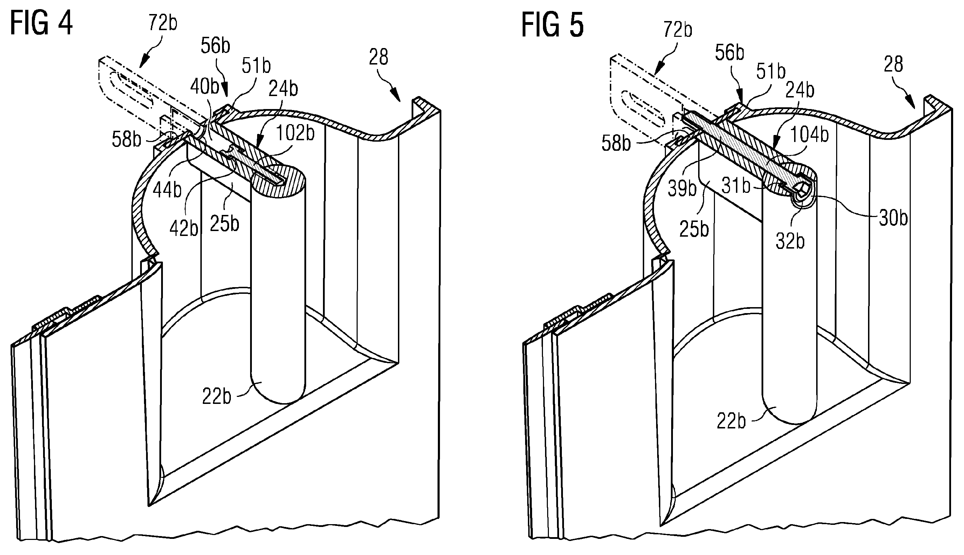

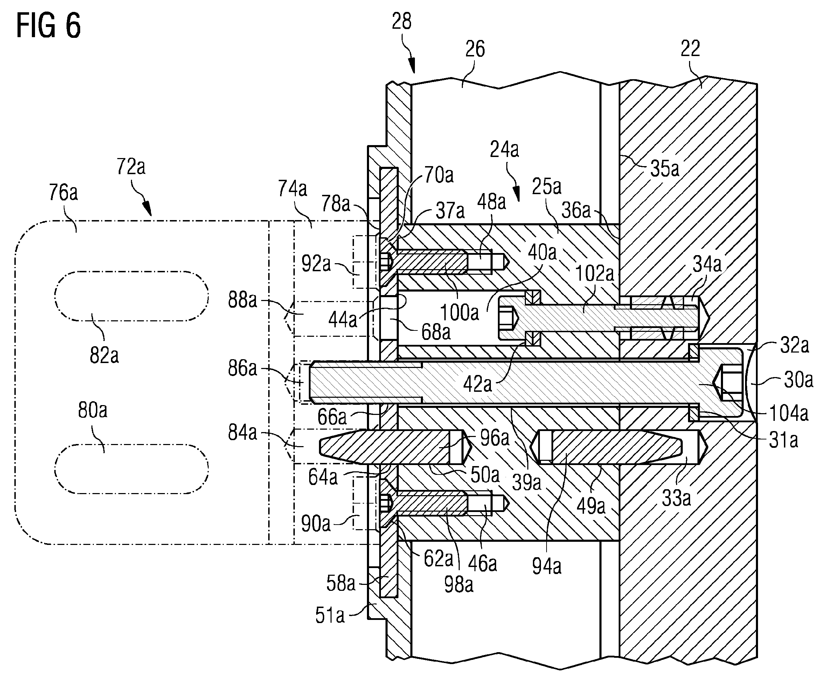

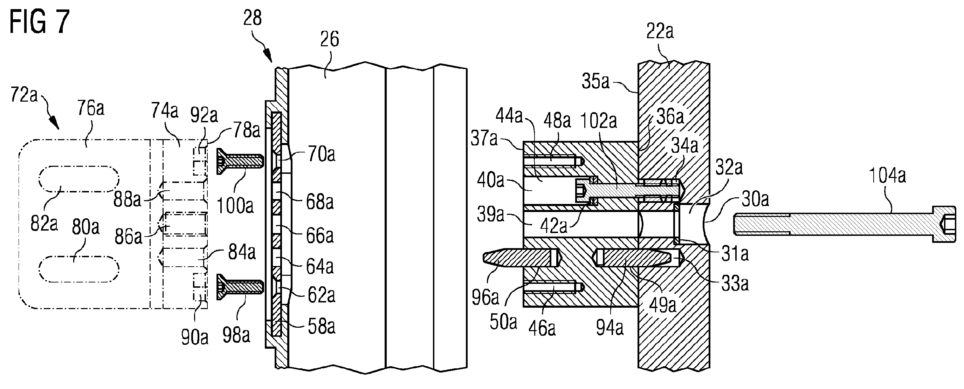

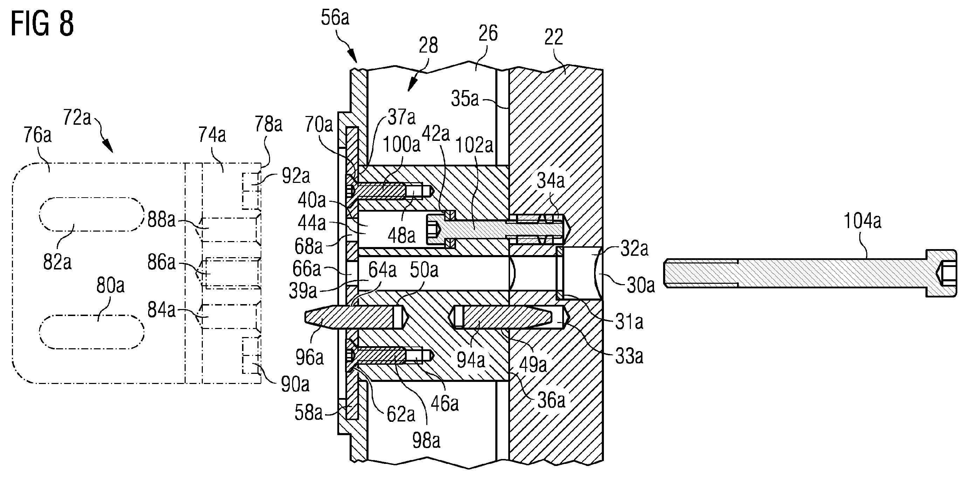

Die Halteanordnung 18 ist bezüglich einer Mittenebene M, die senkrecht zu einer Längserstreckung des Halteelements 22 verläuft und in Fig. 1 gestrichelt dargestellt ist, achsensymmetrisch ausgebildet und weist entsprechende identisch ausgebildete und spiegelverkehrt angeordnete Bauteile im Bereich jedes Endabschnitts des Halteelements 22 auf. Figuren 2 bis 5 zeigen die Halteanordnung 18 im Bereich des Abstandselements 24b, und Figuren 6 bis 8 zeigen die Halteanordnung 18 im Bereich des Abstandselements 24a.

Jeder Endabschnitt des Halteelements 22 weist eine kreisrunde Durchgangsöffnung 30a, b auf, die sich entlang ihrer Längserstreckung stufenförmig in Richtung zum Abstandselement 24a, 24b hin verjüngt. Ein Abschnitt 31a, 31b einer Begrenzungswand 32a, 32b der Durchgangsöffnung 30a, 30b ist ringförmig als Anlagefläche für einen Schraubenkopf einer Verbindungsschraube ausgebildet und erstreckt sich parallel zur Längserstreckung des Halteelements 22 und senkrecht zu einer Längserstreckung der Durchgangsöffnung 30a, 30b. Das Halteelement 22 weist ferner eine kreisrunde, erste Ausnehmung 33a, 33b und eine kreisrunde, zweite Ausnehmung 34a, 34b auf, die von einer zylinderförmigen Stirnfläche 35a, 35b des Halteelements 22, die zum Abstandselement 24a bzw. 24b weist, jeweils benachbart zur Durchgangsöffnung 30a, 30b in einen Körper des Halteelements 22 eingebracht sind. Die Durchgangsöffnung 30a, 30b, die erste Ausnehmung 33a, 33b und die zweite Ausnehmung 34a, 34b sind entlang der Längserstreckung des Halteelements 22 gesehen zueinander in Flucht angeordnet und erstrecken sich im Wesentlichen parallel zueinander. Eine Längserstreckung der ersten und zweiten Ausnehmung 33a, 33b, 34a, 34b ist etwa gleich.

Jedes Abstandselement 24a, 24b weist einen im Wesentlichen quaderförmigen Körper 25a, 25b auf, dessen Längserstreckung parallel zur Längserstreckung des Halteelements 22 verläuft. Eine erste Stirnfläche 36a, b des Abstandselements 24a, 24b ist konkav gewölbt und liegt an der Stirnfläche 35a, 35b des Halteelements 22 passgenau an. Eine der ersten Stirnfläche 36a, 36b gegenüberliegende, zweite Stirnfläche 37a, 37b des Abstandselements 24a, 24b ist flach ausgebildet und in einer rechteckigen Durchgangsöffnung 38a, 38b des Türholmverkleidungselements 28 angeordnet.

Eine erste Durchgangsöffnung 39a, 39b jedes Abstandselements 24a, 24b weist einen konstanten Durchmesser auf, der etwa dem Durchmesser der Durchgangsöffnung 30a, b des Halteelements 22 entspricht. Das Abstandselement 24a, 24b weist ferner eine zweite Durchgangsöffnung 40a, 40b auf, die sich in Richtung zum Halteelement 22 stufenförmig verjüngt. Ein Abschnitt 42a, 42b einer Begrenzungswand 44a, b der zweiten Durchgangsöffnung 40a, 40b ist ringförmig als Anlagefläche für einen Schraubenkopf einer weiteren Verbindungsschraube ausgebildet und erstreckt sich parallel zur Längserstreckung des Halteelements 22 und senkrecht zu einer Längserstreckung der Durchgangsöffnung 40a, 40b. Ein Durchmesser eines ersten Abschnitts der Durchgangsöffnung 40a, 40b der benachbart zur zweiten Stirnfläche 37a, 37b angeordnet ist, entspricht etwa einem Durchmesser der Durchgangsöffnung 30a, 30b des Halteelements 22. Ein Durchmesser eines zweiten Abschnitts der zweiten Durchgangsöffnung 40a, 40b, der benachbart zur ersten Stirnfläche 36a, 36b angeordnet ist, beträgt etwa die Hälfte des Durchmessers des ersten Abschnitts der zweiten Durchgangsöffnung 40a, 40b.

Eine erste und zweite Ausnehmung 46a, 46b, 48a, 48b jedes Abstandselements 24a, 24b in Form von Sacklöchern sind von der Stirnseite 37a, 37b des Abstandselements 24a, 24b aus in den Körper 25a, b des Abstandselements 24a, 24b eingebracht. Ein Durchmesser der ersten und zweiten Ausnehmung 46a, 46b, 48a, 48b beträgt etwa die Hälfte des Durchmessers des ersten Abschnitts der zweiten Durchgangsöffnung 40a, 40b. Eine Längserstreckung der ersten und zweiten Ausnehmung 46a, 46b, 48a, 48b ist geringfügig kleiner als eine Längserstreckung des ersten Abschnitts der zweiten Durchgangsöffnung 40a, 40b. Eine dritte Ausnehmung 49a, 49b jedes Abstandselements 24a, 24b erstreckt sich ausgehend von der ersten Stirnfläche 36a, 36b in den Körper 25a, 25b des Abstandselements 24a, 24b hinein und verläuft etwa parallel zur ersten Durchgangsöffnung 39a, 39b. Eine vierte Ausnehmung 50a, 50b jedes Abstandselements 24a, 24b erstreckt sich ausgehend von der Stirnfläche 37a, 37b in den Körper 25a, 25b des Abstandselements 24a, 24b hinein und verläuft auch im Wesentlichen parallel zur ersten Durchgangsöffnung 39a, 39b. Die dritte und vierte Ausnehmung 49a, 49b, 50a, 50b sind senkrecht zur Längserstreckung des Halteelements 22 gesehen zueinander in Flucht angeordnet und eine zueinander identische Längserstreckung der dritten und vierten Ausnehmung 49a, 49b, 50a, 50b ist geringfügig kleiner als eine Längserstreckung des ersten und zweiten Ausnehmung 46a, 46b, 48a, 48b. Ein Durchmesser der dritten und vierten Ausnehmung 49a, 49b, 50a, 50b beträgt etwa zwei Drittel des Durchmessers der Durchgangsöffnung 39a, 39b des Abstandselements 24a, 24b. Die vierte Ausnehmung 50a, b ist entlang der Längserstreckung des Halteelements 22 gesehen zwischen der ersten Ausnehmung 46a, 46b und der ersten Durchgangsöffnung 39a, 39b und in Flucht mit der ersten und zweiten Ausnehmung 46a, 46b, 48a, 48b und der ersten Durchgangsöffnung 39a, b und dem ersten Abschnitt der zweiten Durchgangsöffnung 40a, b angeordnet, während die dritte Ausnehmung 49a, 49b entlang der Längserstreckung des Halteelements 22 gesehen in Flucht mit dem zweiten Abschnitt der zweiten Durchgangsöffnung 40a, 40b angeordnet ist.

Das Türholmverkleidungselement 28 weist einen winkelförmigen Vorsprung 51a, 51b auf, der beabstandet von einem Bodenabschnitt und zwei Seitenabschnitten eines Rands 52a, 52b der Durchgangsöffnung 38a, 38b des Türholmverkleidungselements 28 angeordnet ist. Der winkelförmige Vorsprung 51a, 51b weist zwei zueinander senkrecht verlaufende Abschnitte auf, so dass ein Abschnitt 54a, 54b des Türholmverkleidungselements 28, der benachbart zu dem Bodenabschnitt und den Seitenabschnitten des Rands 52a, 52b angeordnet ist, und der winkelförmige Vorsprung 51a, 51b eine Tasche 56a, 56b bilden, die in Richtung zum Halteelement 22 und zum Türholm 14 hin offen ist.

Ein plattenförmiges Anlageelement 58a, 58b der Halteanordnung 18 ist in einer nutförmigen Öffnung 60a, 60b jeder Tasche 56a, 56b aufgenommen. Das Anlageelement 58a, 58b weist eine erste bis fünfte Durchgangsöffnung 62a, 62b - 70a, 70b auf, die kreisrund ausgebildet und entlang der Längserstreckung des Halteelements 22 gesehen zueinander in Flucht angeordnet sind und sich zueinander im Wesentlichen parallel erstrecken. Die zweite bis vierte Durchgangsöffnung 64a, 64b, 66a, 66b, 68a, 68b weisen einen konstanten Durchmesser entlang ihrer Längserstreckung auf, während sich die erste und fünfte Durchgangsöffnung 62a, 62b, 70a, 70b, die identisch zueinander ausgebildet sind, sich in Richtung zu dem Halteelement 22 gleichmäßig verjüngen.

Jedes Verbindungselement 72a, 72b der Halteanordnung 18 weist einen L-förmigen Körper mit einem ersten Abschnitt 74a, 74b und einen zweiten Abschnitt 76a, 76b auf, die sich etwa senkrecht zueinander erstrecken. Der erste Abschnitt 74a, 74b des Verbindungselements 70a, 70b weist eine flach ausgebildete Stirnseite 78a, 78b auf. Der zweite Abschnitt 76a, 76b weist längliche Durchgangsöffnungen 80a, 80b, 82a, 82b auf, durch die entsprechende Verbindungsschrauben mit einem weiteren Verbindungselement verschraubt sind, das wiederum direkt oder indirekt mit dem Türholm 14 verbunden ist. Eine Dicke des ersten Abschnitts 74a, 74b, die in Richtung zum Anlageelement 58a, 58b gemessen ist, ist etwa dreimal so groß wie eine Dicke des zweiten Abschnitts 76a, 76b des Verbindungselements 72a, 72b, die in eine Richtung senkrecht zur Längserstreckung des Halteelements 22 und senkrecht zur Dickenrichtung des ersten Abschnitts 74a, 74b des Verbindungselements 72a, 72b gemessen ist.

Eine jeweils kreisrunde, erste bis dritte Durchgangsöffnung 84a, 84b - 88a, 88b des ersten Abschnitts 74a, 74b des Verbindungselements 72a, 72b sind in Flucht mit der zweiten bis vierten Durchgangsöffnungen 64a, 64b - 68a, 68b des Anlageelements 58a, 58b angeordnet und weisen jeweils einen Durchmesser auf, der etwa dem Durchmesser der entsprechenden Durchgangsöffnung 64a, 64b - 68a, 68b des Anlageelements 58a, 58b und der entsprechenden Ausnehmung 50a, 50b, 39a, 39b, 40a, 40b des Abstandselements 24a, 24b entspricht. Eine erste und zweite Ausnehmung 90a, 90b, 92a, 92b des Verbindungselements 72a, 72b sind ausgehend von der Stirnfläche 78a, 78b des ersten Abschnitts 74a, 74b des Verbindungselements 72a, 72b in den ersten Abschnitt 74a, 74b des Verbindungselements 72a, 72b eingebracht. Ein Durchmesser der ersten und zweiten Ausnehmung 90a, 90b, 92a, 92b ist geringfügig größer als ein größter Durchmesser der Durchgangsöffnungen 62a, 62b, 70a, 70b des Anlageelements 58a, 58b.

In einem montierten Zustand der Halteanordnung 18 ist das Abstandselement 24a, 24b zwischen dem Halteelement 22 und dem Anlageelement 58a, 58b angeordnet und die erste Stirnfläche 36a, 36b des Abstandselements 24a, 24b und die Stirnfläche 35a, 35b des Halteelements 22 und die zweite Stirnfläche 37a, 37b des Abstandselements 24a, 24b und die Stirnfläche des Anlageelements 58a, 58b liegen passgenau aneinander an. Die Stirnfläche 78a, 78b des Verbindungselements 72a, 72b liegt an einer weiteren Stirnfläche des Anlageelements 58a, 58 passgenau an.

Ein erster Verbindungsstift 94a, 94b ist in die ersten Ausnehmung 33a, 33b des Halteelements 22 und der dritten Ausnehmung 49a, 49b des Abstandselements 24a, 24b aufgenommen. Ein zweiter Verbindungsstift 96a, 96b ist in der vierten Ausnehmung 50a, 50b des Abstandselements 24a, 24b und durch die Durchgangsöffnung 64a, 64b des Anlageelements 58a, 58b in der ersten Durchgangsöffnung 84a, 84b des Verbindungselements 72a, 72b aufgenommen. Eine sich verjüngende Spitze des ersten bzw. zweiten Verbindungsstifts 94a, 94b, 96a, 96b weist zum Halteelement 22 bzw. zum Türholm 14. Eine Verbindungsschraube 98a, 98b ist durch die erste Durchgangsöffnung 62a, 62b des Anlageelements 58a, 58b in der ersten Ausnehmung 46a, 46b des Abstandselements 24a, 24b eingeschraubt. Eine weitere Verbindungsschraube 100a, 100b ist durch die fünfte Durchgangsöffnung 70a, 70b des Anlageelements 58a, 58b in der zweiten Ausnehmung 48a, 48b des Abstandselements 24a, 24b eingeschraubt.

Eine Verbindungsschraube 102a, 102b ist in der Ausnehmung 40a, 40b des Abstandselements 24a, 24b und der Ausnehmung 34a, 34b des Halteelements 22 derart eingeschraubt, dass der Schraubenkopf der Verbindungsschraube 102a, 102b an dem ringförmigen Abschnitt 42a, 42b der Begrenzungswand 44a, 44b der zweiten Durchgangsöffnung 40a, 40b anliegt. Eine weitere Verbindungsschraube 104a, 104b ist in der Durchgangsöffnung 30a, 30b des Halteelements 22, der Durchgangsöffnung 39a, 39b des Abstandselements 24a, 24b und der Durchgangsöffnung 86a, 86b des Verbindungselements 72a, 72b eingeschraubt und erstreckt sich durch die Durchgangsöffnung 66a, 66b des Anlageelements 58a, 58b. Dabei liegt ein Schraubenkopf der Verbindungsschraube 104a, 104b an dem ringförmigen Abschnitt 31a, 31b der Begrenzungswand 32a, 32b der Durchgangsöffnung 30a, 30b an.

Bei einem Verfahren zum Zusammenbauen der Halteanordnung 18 wird zunächst jedes Abstandselement 24a, 24b mittels des ersten Verbindungsstifts 94a, 94b an dem Halteelement 22 zentriert. Danach wird die Verbindungsschraube 102a, 102b in der Durchgangsöffnung 40a, 40b des Abstandselements 24a, 24b und der Ausnehmung 34a, 34b des Halteelements 22 verschraubt. Im Anschluss daran wird das Abstandselement 24a, 24b benachbart zu der Lasche 56a, 56b des Türholmverkleidungselements 28 positioniert, in der das Anlageelement 58a, 58b eingesteckt ist. Die Verbindungsschrauben 98a, 98b, 100a, 100b werden durch die erste bzw. fünfte Durchgangsöffnung 62a, 62b, 70a, 70b des Anlageelements 60a, 60b in der ersten bzw. zweiten Ausnehmung 46a, 46b bzw. 48a, 48b verschraubt. Der zweite Verbindungsstift 96a, 96b wird in der vierten Ausnehmung 50a, 50b des Abstandselements 24a, 24b durch die Durchgangsöffnung 66a, 66b des Anlageelements 60a, 60b hindurch eingeschoben und das Verbindungselement 72a, 72b wird derart an dem Anlageelement 58a, 58b angeordnet, dass der zweite Verbindungsstift 96a, 96b in der Ausnehmung 84a, 84b des Verbindungselements 72a, 72b angeordnet ist.

Danach wird das Verbindungselement 72a, 72b mittels der Verbindungsschraube 104a, 104b mit dem vormontierten Modul aus dem Halteelement 22, dem Abstandselement 24a, 24b, dem Türholmverkleidungselement 28 und dem Anlageelement 58a, 58b verschraubt. Danach wird das Verbindungselement 72a, 72b mittels entsprechender Verbindungsschrauben, die durch die Durchgangsöffnungen 80, 82 verlaufen, mit dem weiteren Verbindungselement verschraubt, das dann direkt oder indirekt an dem Türholm 14 befestigt wird.

Obwohl die Erfindung im Detail durch das bevorzugte Ausführungsbeispiel näher illustriert und beschrieben ist, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Halteanordnung (18) für einen Einstiegsbereich (10) eines Schienenfahrzeugs (12), mit:
- einem stangenförmigen Halteelement (22),
- einem Türholmverkleidungselement (28) zum Verkleiden eines Türholms (14), wobei das Türholmverkleidungselement (28) eine Durchgangsöffnung (38a, 38b) aufweist,
- einem Abstandselement (24a, 24b), das zwischen dem Halteelement (22) und dem Türholmverkleidungselement (28) angeordnet ist und eine Durchgangsöffnung (39a, 39b) aufweist,
- einem Verbindungselement (72a, 72b) zum Verbinden des Türholmverkleidungselements (28) mit dem Türholm (14), wobei das Verbindungselement (72a, 72b) auf einer dem Abstandselement (24a, 24b) abgewandten Seite des Türholmverkleidungselements (28) angeordnet ist und eine Durchgangsöffnung (86a, 86b) aufweist,
**dadurch gekennzeichnet, dass**
das stangenförmige Halteelement (22) eine Durchgangsöffnung (30a, 30b) aufweist und
- eine Verbindungsschraube (104a, 104b), die durch die Durchgangsöffnung (30a, 30b) des Halteelements (22), die Durchgangsöffnung (39a, 39b) des Abstandselements (24a, 24b) und die Durchgangsöffnung (38a, 38b) des Türholmverkleidungselements (28) in der Durchgangsöffnung (86a, 86b) des Verbindungselements (72a, 72b) verschraubt ist.

2. Halteanordnung (18) nach Anspruch 1, wobei sich die Durchgangsöffnung (30a, 30b) des Halteelements (22) in Richtung zum Abstandselement (24a, 24b) hin stufenförmig verjüngt, wobei ein Schraubenkopf der Verbindungsschraube (104a, 104b) an einem sich quer, insbesondere senkrecht, zur Längserstreckung der Durchgangsöffnung (30a, 30b) des Halteelements (22) erstreckenden Abschnitt (31a, 31b) einer Begrenzungswand (32a, 32b) der Durchgangsöffnung (30a, 30b) des Halteelements (22) anliegt.

3. Halteanordnung (18) nach einem der vorherigen Ansprüche, wobei das Abstandselement (24a, 24b) eine weitere Durchgangsöffnung (40a, 40b) aufweist, die sich in Richtung zum Halteelement (22) hin stufenförmig verjüngt, wobei das Abstandselement (24a, 24b) mittels einer weiteren Verbindungsschraube (102a, 102b) mit dem Halteelement (22) verschraubt ist, deren Schraubenkopf an einem sich quer, insbesondere senkrecht, zur Längserstreckung der weiteren Durchgangsöffnung (40a, 40b) des Abstandselements (24a, 24b) erstreckenden Abschnitt (42a, 42b) einer Begrenzungswand (44a, 44b) der weiteren Durchgangsöffnung (40a, 40b) anliegt.

4. Halteanordnung (18) nach einem der vorherigen Ansprüche, wobei das Abstandselement (24a, 24b) eine Ausnehmung (49a, 49b) aufweist, die von einer zum Halteelement (22) weisenden Stirnfläche (36a, 36b) aus in das Abstandselement (24a, 24b) eingebracht ist, wobei das Halteelement (22) eine in Flucht mit der Ausnehmung (49a, 49b) angeordnete Ausnehmung (33a, 33b) aufweist, die von einer zum Abstandselement (24a, 24b) weisenden Stirnfläche (35a, 35b) des Halteelements (22) aus in das Halteelement (22) eingebracht ist, ferner mit:
- einem Verbindungsstift (94a, 94b), der, insbesondere jeweils zur Hälfte, in der Ausnehmung (49a, 49b) des Abstandselement (24a, 24b) und der Ausnehmung (33a, 33b) des Halteelements (22) angeordnet ist.

5. Halteanordnung (18) nach einem der vorherigen Ansprüche, wobei das Abstandselement (24a, 24b) eine weitere Ausnehmung (50a, 50b) aufweist, die von einer zum Verbindungselement (72a, 72b) weisenden Stirnfläche (37a, 37b) aus in das Abstandselement (24a, 24b) eingebracht ist, wobei das Verbindungselement (72a, 72b) eine weitere Durchgangsöffnung (84a, 84b) aufweist, ferner mit:
- einem weiteren Verbindungsstift (96a, 96b), der, insbesondere jeweils zur Hälfte, in der weiteren Ausnehmung (50a, 50b) des Abstandselements (24a, 24b) und der weiteren Durchgangsöffnung (84a, 84b) des Verbindungselements (72a, 72b) angeordnet ist.

6. Halteanordnung (18) nach Anspruch 4 oder 5, wobei die Ausnehmung (49a, 49b) des Abstandselements (24a, 24b) und die weitere Ausnehmung (50a, 50b) des Abstandselements (24a, 24b) zueinander in Flucht angeordnet sind.

7. Halteanordnung (18) nach einem der vorherigen Ansprüche, wobei das Abstandselement (24a, 24b) zumindest eine noch weitere Ausnehmung (46a, 46b, 48a, 48b) aufweist, die von einer zum Verbindungselement (72) weisenden Stirnfläche (37a, 37b) des Abstandselement (24a, 24b) in das Abstandselement (24a, 24b) eingebracht ist, wobei das Türholmverkleidungselement (28) benachbart zu einem Rand (52a, 52b) seiner Durchgangsöffnung (38a, 38b) einen winkelförmigen Vorsprung (51a, 52b) aufweist, wobei ein Abschnitt eines Rands (54a, 54b) des Türholmverkleidungselements (28) benachbart zu dem Abschnitt des Rands (52a, 52b) der Durchgangsöffnung (38a, 38b) und der winkelförmige Vorsprung (51a, 51b) eine Tasche (56a, 56b) bilden, ferner mit:
- einem plattenförmigen Anlageelement (58a, 58b) für das Abstandselement (24a, 24b) und das Verbindungselement (72a, 72b), das in der Tasche (56a, 56b) angeordnet ist und eine Durchgangsöffnung (62a, 62b, 70a, 70b) aufweist, und
- einer noch weiteren Verbindungsschraube (96a, 96b, 98a, 98b), die durch die Durchgangsöffnung (62a, 62b, 70a, 70b) des Anlageelements (58a, 58b) in der zumindest einen noch weiteren Ausnehmung (46a, 46b, 48a, 48b) des Abstandselements (24a, 24b) verschraubt ist.

8. Halteanordnung (18) nach einem der vorherigen Ansprüche, wobei ein Körper (25a, 25b) des Abstandselements (24a, 24b) im Wesentlichen quaderförmig ausgebildet ist, wobei eine Längserstreckung des Körpers (25a, 25b) im Wesentlichen parallel zur Längserstreckung des Halteelements (22) verläuft.

9. Halteanordnung (18) nach Anspruch 7 oder 8, wobei eine zum Halteelement (22) weisende Stirnfläche (36a, 36b) des Abstandselements (24a, 24b) an dem Halteelement (22) anliegt und konkav gewölbt ausgebildet ist, wobei eine der Stirnfläche (36a, 36b) gegenüberliegende, weitere Stirnfläche (37a, 37b) des Abstandselements (24a, 24b) am Anlageelement (58a, 58b) anliegt und flach ausgebildet ist.

10. Verfahren zum Zusammenbauen einer Halteanordnung (18) für einen Einstiegsbereich (10) eines Schienenfahrzeugs (12) nach einem der Ansprüche 1 bis 9, mit:
- Bereitstellen eines stangenförmigen Halteelements (22), das eine Durchgangsöffnung (38a, 38b) aufweist,
- Bereitstellen eines Türholmverkleidungselements (28) zum Verkleiden eines Türholms (14), wobei das Türholmverkleidungselement (28) eine Durchgangsöffnung (38a, 38b) aufweist,
- Bereitstellen eines Abstandselements (24a, 24b), das eine Durchgangsöffnung (39a, 39b) aufweist, und
- Bereitstellen eines Verbindungselements (72a, 72b) zum Verbinden des Türholmverkleidungselements (28) mit dem Türholm (14), wobei das Verbindungselement (72a, 72b) eine Durchgangsöffnung (86a, 86b) aufweist,
- Anordnen des Abstandselements (24a, 24b) zwischen dem Halteelement (22) und dem Türholmverkleidungselement (28),
- Anordnen des Verbindungselements (72a, 72b) auf einer dem Abstandselement (24a, 24b) abgewandten Seite des Türholmverkleidungselements (28) und
- Verschrauben des Halteelements (22) mittels einer Verbindungsschraube (104a, 104b) durch seine Durchgangsöffnung (30a, 30b), durch die Durchgangsöffnung (39a, 39b) des Abstandselements (24a, 24b) und durch die Durchgangsöffnung (38a, 38b) des Türholverkleidungselements (28) in der Durchgangsöffnung (86a, 86b) des Verbindungselements (72a, 72b).

## Claims

1. Holding arrangement (18) for an entry area (10) of a rail vehicle (12), said holding arrangement having:
- a rod-shaped holding element (22),
- a door pillar paneling element (28) for covering a door pillar (14), wherein the door pillar paneling element (28) comprises a through opening (38a, 38b),
- a spacer element (24a, 24b) which is arranged between the holding element (22) and the door pillar paneling element (28) and comprises a through opening (39a, 39b),
- a connecting element (72a, 72b) for connecting the door pillar paneling element (28) to the door pillar (14), wherein the connecting element (72a, 72b) is arranged on a side of the door pillar paneling element (28) remote from the spacer element (24a, 24b) and comprises a through opening (86a, 86b),
**characterized in that**
the rod-shaped holding element (22) comprises a through opening (30a, 30b) and
- a connecting screw (104a, 104b) which is screwed through the through opening (30a, 30b) of the holding element (22), the through opening (39a, 39b) of the spacer element (24a, 24b) and the through opening (38a, 38b) of the door pillar paneling element (28) in the through opening (86a, 86b) of the connecting element (72a, 72b).

2. Holding arrangement (18) according to Claim 1, wherein the through opening (30a, 30b) of the holding element (22) tapers in a step-shaped manner in the direction toward the spacer element (24a, 24b), wherein a screw head of the connecting screw (104a, 104b) abuts against a portion (31a 31b) of a boundary wall (32a, 32b) of the through opening (30a, 30b) of the holding element (22), said portion extending transversely, in particular perpendicularly, to the longitudinal extension of the through opening (30a, 30b) of the holding element (22).

3. Holding arrangement (18) according to one of the preceding claims, wherein the spacer element (24a, 24b) comprises a further through opening (40, 40b) which tapers in a step-shaped manner in the direction toward the holding element (22), wherein the spacer element (24a, 24b) is screw-connected to the holding element (22) by means of a further connecting screw (102a, 102b), the screw head of which abuts against a portion (42a, 42b) of a boundary wall (44a, 44b) of the further through opening (40a, 40b), said portion extending transversely, in particular perpendicularly, to the longitudinal extension of the further through opening (40a, 40b) of the spacer element (24a, 24b).

4. Holding arrangement (18) according to one of the preceding claims, wherein the spacer element (24a, 24b) comprises a recess (49a, 49b) which is introduced into the spacer element (24a, 24b) from an end face (36a, 36b) that points to the holding element (22), wherein the holding element (22) comprises a recess (33a, 33b) which is arranged in alignment with the recess (49a, 49b) and is introduced into the holding element (22) from an end face (35a, 35b) of the holding element (22) that points to the spacer element (24a, 25b), said holding arrangement having additionally:
*- a connecting pin (94a, 94b) which is arranged, in particular in each case half in the recess (49a, 49b) of the spacer element (24a, 24b) and half in the recess (33a, 33b) of the holding element (22).

5. Holding arrangement (18) according to one of the preceding claims, wherein the spacer element (24a, 24b) comprises a further recess (50a, 50b) which is introduced into the spacer element (24a, 24b) from an end face (37a, 37b) that points to the connecting element (72a, 72b), wherein the connecting element (72a, 72b) comprises a further through opening (84a, 84b), said holding arrangement having additionally:
- a further connecting pin (96a, 96b) which is arranged, in particular in each case half in the further recess (50a, 50b) of the spacer element (24a, 24b) and half in the further recess (84a, 84b) of the connecting element (72a, 72b).

6. Holding arrangement (18) according to Claim 4 or 5, wherein the recess (49a, 49b) of the spacer element (24a, 24b) and the further recess (50a, 50b) of the spacer element (24a, 24b) are arranged in alignment with one another.

7. Holding arrangement (18) according to one of the preceding claims, wherein the spacer element (24a, 24b) comprises at least one even further recess (46a, 46b, 48a, 48b) which is introduced into the spacer element (24a, 24b) from an end face (37a, 37b) of the spacer element (24a, 24b) that points to the connecting element (72), wherein the door pillar paneling element (28) comprises an angular projection (51a, 52b) adjacent an edge (52a, 52b) of its through opening (38a, 38b), wherein a portion of an edge (54a, 54b) of the door pillar paneling element (28) adjacent the portion of the edge (52a, 52b) of the through opening (38a, 38b) and the angular projection (51a, 51b) form a pocket (56a, 56b), said holding arrangement having additionally:
- a plate shaped abutment element (58a, 58b) for the spacer element (24a, 24b) and the connecting element (72a, 72b) which is arranged in the pocket (56a, 56b) and comprises a through opening (62a, 62b, 70a, 70b), and
- one even further connecting screw (96a, 96b, 98a, 98b) which is screw-connected through the through opening (62a, 62b, 70a, 70b) of the abutment element (58a, 58b) in the at least one even further recess (46a, 46b, 48a, 48b) of the spacer element (24a, 24b).

8. Holding arrangement (18) according to one of the preceding claims, wherein a body (25a, 25b) of the spacer element (24a, 24b) is realized in a substantially cuboid manner, wherein a longitudinal extension of the body (25a, 25b) extends substantially parallel to the longitudinal extension of the holding element (22).

9. Holding arrangement (18) according to Claim 7 or 8, wherein an end face (36a, 36b) of the spacer element (24a, 24b) pointing to the holding element (22) abuts against the holding element (22) and is realized in a concave manner, wherein a further end face (37a, 37b) of the spacer element (24a, 24b) located opposite the end face (36a, 36b) abuts against the abutment element (58a, 58b) and is realized in a flat manner.

10. Method for assembling a holding arrangement (18) for an entry area (10) of a rail vehicle (12) according to one of Claims 1 to 9, said method having the following steps:
- providing a rod-shaped holding element (22) which comprises a through opening (38a, 38b),
- providing a door pillar paneling element (28) for covering a door pillar (14), wherein the door pillar paneling element (28) comprises a though opening (38a, 38b),
- providing a spacer element (24a, 24b) which comprises a through opening (39a, 39b), and
- providing a connecting element (72a, 72b) for connecting the door pillar paneling element (28) to the door pillar (14), wherein the connecting element (72a, 72b) comprises a through opening (86a, 86b),
- arranging the spacer element (24a, 24b) between the holding element (22) and the door pillar paneling element (28),
- arranging the connecting element (72a, 72b) on a side of the door pillar paneling element (28) that is remote from the spacer element (24a, 24b) and
- screw connecting the holding element (22) by means of a connecting screw (104a, 104b) through its through opening (30a, 30b), through the through opening (39a, 39b) of the spacer element (24a, 24b) and through the through opening (38a, 38b) of the door pillar paneling element (28) in the through opening (86a, 86b) of the connecting element (72a, 72b).

## Revendications

1. Dispositif (18) de retenue d'une zone (10) d'accès d'un véhicule (12) ferroviaire, comprenant :
- un élément (22) de retenue en forme de barre,
- un élément (28) d'habillage d'un longeron de porte pour habiller un longeron (14) de porte, l'élément (28) d'habillage de longeron de porte ayant une ouverture (38a, 38b) de passage,
- un élément (24a, 24b) d'entretoisement, qui est disposé entre l'élément (22) de retenue et l'élément (28) d'habillage de longeron de porte et qui a une ouverture (39a, 39b) de passage,
- un élément (72a, 72b) de liaison, pour relier l'élément (28) d'habillage de longeron de porte au longeron (14) de porte, l'élément (72a, 72b) de liaison étant disposé du côté de l'élément (28) d'habillage de longeron de porte éloigné de l'élément (24a, 24b) d'entretoisement et ayant une ouverture (28a, 28b) de passage,
**caractérisé en ce que**
l'élément (22) de retenue en forme de barre a une ouverture (30a, 30b) de passage et
- une vis (104a, 104b) de liaison qui est vissée dans l'ouverture (86a, 86b) de passage de l'élément (72a, 72b) de liaison, en passant par l'ouverture (30a, 30b) de passage de l'élément (22) de retenue, par l'ouverture (39a, 39b) de passage de l'élément (24a, 24b) d'entretoisement et par l'ouverture (38a, 38b) de passage de l'élément (28) d'habillage de longeron de porte.

2. Dispositif (18) de retenue suivant la revendication 1, dans lequel l'ouverture (30a, 30b) de passage de l'élément (22) de retenue se rétrécit en forme de palier dans la direction de l'élément (24a, 24b) d'entretoisement, une tête de la vis (104a, 104b) de liaison s'appliquant à une partie (31a, 31b), s'étendant transversalement, notamment perpendiculairement, à l'étendue longitudinale de l'ouverture (30a, 30b) de passage de l'élément (22) de retenue, d'une paroi (32a, 32b) de délimitation de l'ouverture (30a, 30b) de passage de l'élément (22) de retenue.

3. Dispositif (18) de retenue suivant l'une des revendications précédentes, dans lequel l'élément (24a, 24b) d'entretoisement a une autre ouverture (40a, 40b) de passage qui se rétrécit en forme de palier dans la direction de l'élément (22) de retenue, l'élément (24a, 24b) d'entretoisement étant vissé à l'élément (22) de retenue au moyen d'une autre vis (102a, 102b) de liaison, dont la tête s'applique à une partie (42a, 42b), s'étendant transversalement, notamment perpendiculairement, à l'étendue longitudinale de l'autre ouverture (40a, 40b) de passage de l'élément (24a, 24b) d'entretoisement, d'une paroi (44a, 44b) de délimitation de l'autre ouverture (40a, 40b) de passage.

4. Dispositif (18) de retenue suivant l'une des revendications précédentes, dans lequel l'élément (24a, 24b) d'entretoisement a un évidement (49a, 49b) qui est ménagé dans l'élément (24a, 24b) d'entretoisement à partir d'une surface (36a, 36b) frontale tournée vers l'élément (22) de retenue, l'élément (22) de retenue ayant un évidement (33a, 33b) aligné avec l'évidement (49a, 49b) et ménagé dans l'élément (22) de retenue à partir d'une surface (35a, 35b) frontale, tournée vers l'élément (24a, 24b) d'entretoisement, de l'élément (22) de retenue, comprenant en outré :
- une broche (94a, 94b) de liaison qui est disposée, notamment respectivement pour moitié, dans l'évidement (49a, 49b) de l'élément (24a, 24b) d'entretoisement et dans l'évidement (33a, 33b) de l'élément (22) de retenue.

5. Dispositif (18) de retenue suivant l'une des revendications précédentes, dans lequel l'élément (24a, 24b) d'entretoisement a un autre évidement (50a, 50b) qui est ménagé dans l'élément (24a, 24b) d'entretoisement à partir d'une surface (37a, 37b) frontale tournée vers l'élément (72a, 72b) de liaison, l'élément (72a, 72b) de liaison ayant une autre ouverture (84a, 84b) de passage, comprenant en outre :
- une autre broche (96a, 96b) de liaison qui, notamment respectivement pour moitié, est disposée dans l'autre évidement (50a, 50b) de l'élément (24a, 24b) d'entretoisement, et dans l'autre ouverture (84a, 84b) de passage de l'élément (72a, 72b) de liaison.

6. Dispositif (18) de retenue suivant la revendication 4 ou 5, dans lequel l'évidement (49a, 49b) de l'élément (24a, 24b) d'entretoisement et l'autre évidement (50a, 50b) de l'élément (24b, 24b) d'entretoisement sont alignés l'un avec l'autre.

7. Dispositif (18) de retenue suivant l'une des revendications précédentes, dans lequel l'élément (24a, 24b) d'entretoisement a au moins encore un autre évidement (46a, 46b, 48a, 48b) qui est ménagé dans l'élément (24a, 24b) d'entretoisement à partir d'une surface (37a, 37b) frontale tournée vers l'élément (72) de liaison, l'élément (28) d'habillage du longeron de porte ayant au voisinage d'un bord (52a, 52b) de son ouverture (38a, 38b) de passage une saillie (51a, 52b) en équerre, une partie d'un bord (54a, 54b) de l'élément (28) d'habillage de longeron de porte voisine de la partie du bord (52a, 52b) de l'ouverture (38a, 38b) de passage et la saillie (51a, 51b) en équerre formant une poche (56a, 56b), comprenant en outre :
- un élément (58a, 58b) en forme de plaque d'application de l'élément (24a, 24b) d'entretoisement et de l'élément (72a, 72b) de liaison, qui est disposé dans la poche (56a, 56b) et qui a une ouverture (62a, 62b, 70a, 70b) de passage et
- encore une autre vis (96a, 96b, 98a, 98b) de liaison, qui est vissée dans le au moins encore un autre évidement (46a, 46b, 48a, 48b) de l'élément (24a, 24b) d'entretoisement en passant par l'ouverture (62a, 62b, 70a, 70b) de passage de l'élément (58a, 58b) d'application.

8. Dispositif (18) de retenue suivant l'une des revendications précédentes, dans lequel un corps (25a, 25b) de l'élément (24a, 24b) d'entretoisement est sensiblement parallélépipédique, une étendue en longueur du corps (25a, 25b) étant sensiblement parallèle à l'étendue en longueur de l'élément (22) de retenue.

9. Dispositif (18) de retenue suivant la revendication 7 ou 8, dans lequel une surface (36a, 36b) frontale, tournée vers l'élément (22) de retenue, de l'élément (24a, 24b) d'entretoisement s'applique à l'élément (22) de retenue et est concave, une autre surface (37a, 37b) frontale, opposée à la surface (36a, 36b) frontale, de l'élément (24a, 24b) d'entretoisement s'appliquant à l'élément (58a, 58b) d'application et étant plane.

10. Procédé d'assemblage d'un agencement (18) de retenue pour une zone (10) d'accès d'un véhicule (12) ferroviaire suivant l'une des revendications 1 à 9, dans lequel :
- on se procure un élément (22) de retenue en forme de barre qui a une ouverture (38a, 38b) de passage,
- on se procure un élément (28) d'habillage de longeron de porte pour habiller un longeron (14) de porte, l'élément (28) d'habillage de longeron de porte ayant une ouverture (38a, 38b) de passage,
- on se procure un élément (24a, 24b) d'entretoisement qui a une ouverture (39a, 39b) de passage,
- on se procure un élément (72a, 72b) de liaison pour relier l'élément (28) d'habillage de longeron de porte au longeron (14) de porte, l'élément (72a, 72b) de liaison ayant une ouverture (86a, 86b) de passage,
- on met l'élément (24a, 24b) d'entretoisement entre l'élément (22) de retenue et l'élément (28) d'habillage de longeron de porte,
- on met l'élément (72a, 72b) de liaison sur un côté, éloigné de l'élément (24a, 24b) d'entretoisement, de l'élément (28) d'habillage de longeron de porte et
- on visse l'élément (22) de retenue au moyen d'une vis (104a, 104b) de liaison,
en passant par son ouverture (30a, 30b) de passage, par l'ouverture (39a, 39b) de passage de l'élément (24a, 24b) d'entretoisement et par l'ouverture (38a, 38b) de passage de l'élément (28) d'habillage de longeron de porte, dans l'ouverture (86a, 86b) de passage de l'élément (72a, 72b) de liaison.
